# EUROPEAN PATENT SPECIFICATION

(11) **EP 1 121 862 B1**
(45) Date of publication and mention of the grant of the patent: **23.05.2007**
(21) Application number: 01200341.4
(22) Date of filing: 31.01.2001
(51) Int. Cl.: A23C 19/16, A01J 27/02

(54) **Methods and means for preparing cheese coatings**
Verfahren und Vorrichtung zur Herstellung von Käseüberzügen
Procédé et installation de préparation d'enrobages pour fromage

(30) Priority: 03.02.2000 EP 00200381
(43) Date of publication of application: 08.08.2001
(73) Proprietor: DSM IP Assets B.V., 6411 TE Heerlen (NL)
(72) Inventor: De Haan, Ben Rudolf, 2272 EN Voorburg (NL); Martin, Thomas, 6221 JH Maastricht (NL); Warmerdam, Martinus Johannes Maria, 2289 BM Rijswijk (NL)
(74) Representative: Matulewicz, Emil Rudolf Antonius

(56) References cited:
- EP-A- 0 615 696
- FR-A- 1 495 160
- GB-A- 854 067
- NL-C- 1 004 792
- US-A- 5 236 624
- PATENT ABSTRACTS OF JAPAN vol. 1998, no. 14, 31 December 1998 (1998-12-31) -& JP 10 236850 A (FUJIKURA LTD), 8 September 1998 (1998-09-08)
- PATENT ABSTRACTS OF JAPAN vol. 1998, no. 13, 30 November 1998 (1998-11-30) -& JP 10 216571 A (ISHIKAWAJIMA HARIMA HEAVY IND CO LTD), 18 August 1998 (1998-08-18)
- DATABASE FSTA [Online] INTERNATIONAL FOOD INFORMATION SERVICE (IFIS), FRANFURT/MAIN, DE; ANONYMOUS: "Mixer looks promising." Database accession no. 71-2-07-e0362 XP002235756 & FOOD ENGINEERING 1970, vol. 42, no. 11, pages 119-120,
- H. LÜCK: "Mould growth on cheese as influenced by piramicin or sorbate treatments" S. AFR. J. DAIRY TECHNOL., vol. 10, no. 3, 1978, pages 143-146, XP000925235
- W. DE RUIG: "Influence of the fungicides sorbate and natamycin in cheese coatings on the quality of cheese" NETHERLANDS MILK AND DAIRY JOURNAL, vol. 39, no. 3, 1985, pages 165-172, XP002144053

## Description

The present invention relates to the field of foods and processes to produce foods. The invention particularly relates to methods and means for the production of cheese coatings and cheese coating solutions.

A trend in the food industry is to increase the number of manipulations to the original food product before it reaches the consumers. During at least part of these manipulations or during interim storage, foods are sometimes provided with a coating. The rational behind the use of coatings varies from application to application. In the production of cheeses, coatings are typically applied to regulate moisture release, to provide physical support to the ripening cheese and/or to reduce the growth of undesired microorganisms on the cheese. Furthermore, coatings on cheeses are economically attractive as the coating reduces loss of moisture and does not negatively effect the development of taste (Ruig, W.G.;Berg, G. van den; (1985) "Influence of the fungicides sorbate and natamycin in cheese coatings on the quality of cheese. "Netherlands Milk and Dairy Journal, 39 (3), 165-172). In addition, a coating can give the cheese a favourable appearance. A plastic coating, for instance, gives a cheese a nice, glossy appearance.

In fact, the coating of cheeses has become a common practice. Particularly good results are obtained with plastic coatings. Such cheese coatings usually comprise a polyene fungicide. As a polyene fungicide, natamycin is often used. Natamycin belongs to the large group of polyene antifungal antibiotics. This group is characterised by a macrocyclic lactone-ring with a number of conjugated carbon-carbon double bonds.

The type of cheese that can be provided with a coating is not particularly limited. Usually, the cheese is of a hard, semi-hard or semi-soft type. Cheeses are usually coated for the first time when the brined/salted cheese has dried sufficiently. The cheese is then coated repeatedly during the first few weeks of ripening. The new coating is typically applied on top of the previous coating. After the first few weeks of ripening, the cheese is coated several times more at regular intervals in the next stage of ripening. Before shipment to the retailers, the cheese is supplied with one or more additional coatings. Coatings are applied more frequently during the first weeks of ripening, because the young cheese is more susceptible to spoilage and more susceptible for deformation due to lack of texture. The interval between coatings can be varied by influencing the amount of polyene fungicide and/or the amount of total dry matter in the coating. In the final coating the amount of fungicide should be sufficient to allow a suitable storage of the cheese during shipment en storage before it reaches the consumer.

Cheese coatings are usually applied by applying a coating solution in liquid form on at least part of the cheese. The coating solidifies upon drying of the coating solution. Many different substances can be used to provide the finished cheese coating. They can vary from biodegradable to synthetic substances. Typically, synthetic substances are used. Such synthetic substances typically comprise a polymer. Such coatings are commonly formed by applying a polymer latex dispersion onto the cheese, which upon drying, forms the coating.

Cheese coating solutions are typically viscous solutions. The most commonly used solutions comprise at least a polymer latex, and preferably further comprise a polyene fungicide. Cheese coating solutions usually further comprise a dye and optionally one or more additives. Such coating solutions are generally produced by specialised factories that deliver them to the food processing companies. Specialisation of production of these types of food coating solutions is necessary for the reason that the mixing of the components requires specialised methods and equipment. Viscous solutions are not easily mixed because of the risk of the mixing in of gas bubbles. Gas bubbles should be avoided as much as possible since these influence the reological properties of the coating solution. Variations in the reological properties can lead to the application of too much or too little of the coating solution onto the cheese. Moreover, gas bubbles in the coating solution can, when they are not sufficiently removed, cause a heterogeneous distribution of the solution onto the cheese leading to the formation of an inhomogeneous coating on the cheese. In particular, a polymer latex is not easily mixed into a homogeneous suspension or solution. Apart from the mentioned gas bubble problem, latex suspensions have an additional constraint in mixing. Shearing forces during mixing must be controlled to prevent substantial degradation of the protective colloids comprising the polymer while still achieving proper mixing of these pseudoplastic dispersions.

Influencing the reological properties will influence the final application meaning that the coating layer can be too thin, resulting in spattering or incomplete covering of the surface to be treated, or too thick, resulting in application problems and incorrect distribution on the surface.

Although the production of cheese coating solutions by specialised factories does fulfil some of the needs of the cheese producing companies it also poses constraints on them. They have to have the cheese coating solution in house when there is demand for the cheese coating solution. Since the content of the cheese coating solution can vary considerably with the type of cheese coated, the cheese producing companies need to have many different coating solutions in house if they want to be able to readily adjust the coating with the type of cheese. As mentioned above, the cheese coating solution usually comprises a polymer latex and preferably further comprises a polyene fungicide. However, the coating solutions typically comprise additional components such as a dye and/or one or more additives. Moreover, the type and/or the amount of polymer, dye and polyene fungicide in the coating solution ideally varies substantially in coating solutions, thus allowing the generation of coatings with particular properties. Different cheeses and different ripening stages of cheeses require different coatings. Thus to be able to produce a variety of coatings for cheese, the food producing companies need to have the specific types of coating solution in house. In particular this is the case when the company wants to be able to quickly adapt the type of coating provided to the cheese.

EP0615696 discloses a process for coating of cheese, with a solution of alginate and rice starch. This solution is prepared in advance, stored in a plastic bucket, closed with a lid, until the moment of use.

NL1004792 discloses a method for the preparation of a cheese coating which comprises a filler. The different components for the preparation of the cheese coating are mixed prior to the application of the cheese coating solution onto the cheese.

However, it is not practical for the companies to have many different food coating solutions in house because of economic reasons and because of the fact that the storage time of the coating solution is limited due to possible bacterial spoilage and/or decay of the fungicide in the suspension. This is particularly true for food coating solutions comprising natamycin. Furthermore, the reological properties of the coating solutions can decline through long storage times, which renders the coating solutions useless.

Having many different coating solutions in house increases the chance that coating solutions become unusable due to expiration of the expiry date. Another disadvantage of the current situation is that when a delivered coating solution is not used immediately upon delivery, the amount of active polyene fungicide in the coating solution has to be higher to accommodate decay during storage of the solution. As the polyene fungicide is usually the most costly component of the coating solution, the delivered coating solutions are therefore more expensive.

To overcome some of the problems mentioned above the invention as indicated in the appended claims 1-22 provides means and methods for the production of a cheese coating solution in-line with the application of the actual coating on the cheese. With "in-line" production is meant that the production of the cheese coating solution is performed immediately before applying the coating solution onto the cheese. In general the time required to obtain the end product, i.e. the coated cheese, starting from the introduction of the separate cheese coating components into the cheese coating device, is comprised between 2 seconds and 30 minutes, preferably it is less than 20 minutes. The end product, i.e. the coated cheese, is identical to that obtained by traditional (not in-line) methods. Reducing the time between production of the cheese coating solutions and their use is particularly advantageous. Short times avoid decomposition of the polyene fungicide and prevent the decay of its concentration in the solution. The limited stability is a problem which especially affects food-coating solutions comprising natamycin and which is overcome in in-line production of the coatings.

With the term "cheese coating" it is meant a coating for a cheese. This does not necessarily mean that the coating comprises cheese. With the invention it is possible to readily adjust the contents of the food coating solution used for the coating of the cheese. This is desirable when the number of different coating solutions needed varies. Furthermore it is not only possible to adapt the amount of coating solution applied to the cheese but also to adjust the content of the cheese coating in-line with the production of the cheese. This capability obviates the need for having a large variety and/or a large amount of ready-made cheese coating solutions in house. This capability also allows the amount of polyene fungicide in the coating solution to be precisely the amount needed to achieve a desired antifungal effect. In other words it obviates the need for a surplus of (expensive) polyene fungicide in the food coating solution and therefore in the resulting coating on the food, thus enabling a more cost-effective production of the coated cheese.

In one aspect, the invention provides a method for the production of a cheese coating solution in-line with the production of a coating on the food, comprising mixing components of the coating solution, wherein preferably at least one of said components comprises a viscosity of at least 4000 mPa.s. Preferably said component comprises a viscosity of at least 4000 mPa.s, and more preferably at least 6000 mPa.s. In general the viscosity must be below 32000 mPa.s. Viscosity of a solution depends on many factors. In this document viscosity is defined in mPa.s, this value is measured at 23 °C, 20 rounds per minute, spindle 6, according to ISO 2555 standard, with a Brookfield viscosity meter RVT.

The mixing of components of said cheese coating solution occurs under essentially transitional or laminar flow conditions. Said laminar flow conditions are maintained by an increased viscosity of at least one component of the cheese coating solution, preferably the polymer latex.

In another aspect the invention provides a method for the preparation of a cheese, wherein a cheese is provided with a cheese coating through providing said cheese with a homogeneous coating solution which is produced in-line with the production of the cheese coating, wherein the cheese coating is formulated on the basis of the produced cheese and/or phase in the ripening of the cheese and wherein the coating solution is generated by mixing a number of components. Preferably at least one of these components comprises a viscosity of at least 4000 mPa.s, the method comprising mixing components of said coating solution into a coating solution in a process that avoids the introduction of gas bubbles into the coating solution. In general the amount of gas bubbles into the coating solution is less than 1 % v/v, preferably less than 0.3% v/v. At least part of the coating solution is subsequently applied in whole or in part to said cheese. In a preferred embodiment said at least one component comprising a viscosity of at least 4000 mPa.s, comprises a polymer latex, the method of mixing in this embodiment further avoiding damage to at least said polymer latex. Damage to a latex can result in a decrease in the viscosity of the solution. Viscosities lower than 1000 mPa.s are difficult to apply in a suited manner onto the cheese.

In another preferred embodiment of the invention, at least one of said components comprises a polyene fungicide.

With the methods of the invention the amount of dry matter in a cheese coating solution, and thereby the thickness of the finished coating, can be varied easily and be optimised toward the direct need. In addition, the amount of polyene fungicide in a cheese coating can easily be optimised (reduced to the actual required amount) since the storage time before application of the solution is limited. Moreover, the manufacturer of cheese or cheese coating is now capable of adjusting the coating solution rapidly to the actual need, thereby avoiding the necessity of accumulating and storing a large number of different coating solutions and increasing the chance that some of these coating solutions pass the expiry date and become unusable.

In another embodiment of the invention the method of mixing the coating solution components comprises mixing of components in a small mixing chamber without introducing gas bubbles into the cheese coating solution, in general the amount of gas bubbles into the cheese coating solution being less than 1 % v/v, preferably less than 0.3% v/v and when the mixed fluid comprises a polymer latex, without damaging the polymer latex. In the mixing chamber mixing of components of said coating solution is performed in a process and/or with a device that is capable of mixing a viscous fluid with other components with agitation, being capable of homogenising fluids with the use of moving parts. Such mixing devices are generally known as dynamic in-line mixers. A dynamic in-line mixer operates in the laminar flow regime. The laminar flow regime is effected by the high viscosity of the cheese coating solution, particularly the polymer latex component of the cheese coating.

A dynamic in-line mixer comprises a mixing chamber and an agitator. The diameter of the mixing chamber is of the same order of magnitude as that of the feed- and/or outlet pipe. In general the volume of a dynamic in-line mixer is comprised between 1 millilitre and 1 litre. The dynamic in-line mixer may be mounted in any position, preferably it is mounted in a vertical or a horizontal position. The mixing chamber contains mixer elements or one or more agitator(s), suitable for laminar mixing. Either the agitator or the mixing chamber itself, or both, move. Such mixer elements or agitator(s) are typically capable of a close wall clearance. Examples are propellers, turbines, flat blades, cylinders or one of a great variety of proprietary designs, or any combination thereof, suitable for laminar mixing and mounted on one or more shafts. One commercial example is the Hoelschertechnic "Gorator". Also centrifugal mixing pumps are suitable for effecting a homogeneous product. Additionally, it is possible that they provide a positive pressure in the liquid. In such a mixing device components of the cheese coating are mixed to an essentially homogeneous solution.

A dynamic in-line mixer is operated in a continuous manner. In continuous operation the components are entering the dynamic in-line mixer and at the same time mixed solution is removed from the mixing chamber. The feed to the mixer can be interrupted if required. Addition of cheese coating components and removal of coating solution can occur with short interruptions of component feed and/or product flow (intermittent continuous) or without interruptions (fully continuous). To maintain the quality, i.e. composition of the cheese coating solution, all component feeds should preferably be stopped at the same time. This is particularly assisted by a suitable computer and/or automated controller.

A continuous production allows the in-line production of the coating solution in a process for the coating of a cheese. A continuous process creates the additional advantage of being able to implement the production of the coating solution in an existing/continuous process for the coating of cheese. The coupling of the generation of the coating solution with the coating of the cheese creates a greatly enhanced flexibility in the choice of coating for the cheese. Moreover, the storage time before use of the coating solution is decreased significantly, thus enabling the use of a more optimal (decreased) amount of polyene fungicide in the coating.

In a preferred embodiment of the invention the dynamic in-line mixer is incorporated into a cheese coating device capable of providing a cheese with a coating solution, thus allowing the in-line production of the coating solution with the coating of a cheese.

In a preferred embodiment, the method of mixing of coating components comprises the joining of coating solution components into a single as yet heterogeneous fluid stream, which fluid stream is subsequently repeatedly mixed by the repeated separation and joining of the fluid stream until an essentially homogeneous coating solution is produced. Such a method is ideally suited for the continuous production of the cheese coating solution and therefore preferred in the invention. A continuous production allows the in-line production of the coating solution in a process for the coating of a cheese.

A continuous process creates the additional advantage of being able to implement the production of the coating solution in an existing/continuous process for the coating of cheese. The coupling of the generation of the coating solution with the coating of the cheese creates a greatly enhanced flexibility in the choice of coating for the cheese. Moreover, the storage time before use of the coating solution is decreased significantly, thus enabling the use of a more optimal (decreased) amount of polyene fungicide in the coating.

In a preferred embodiment, mixing of components of said coating solution is performed in a process and/or with a device that is capable of mixing a viscous fluid with other components without agitation, being capable of homogenising fluids without the use of moving parts. This device is called a static mixer or also motionless in-line mixer. A static mixer capable of laminar mixing, operates in the laminar flow regime. The laminar flow regime is effected by the high viscosity of the cheese coating solution, particularly the polymer latex component of the cheese coating.

A functional equivalent of a static mixer is a device without moving parts, capable of mixing a viscous solution through laminar mixing without introducing gas bubbles into the mixed fluid, the amount of gas bubbles in the fluid being in general less than 1 % v/v, preferably less than 0.3% v/v and when the mixed fluid comprises a polymer latex, without damaging the polymer latex. It has been found that a static mixer is particularly suited for the generation of a continuous fluid stream of a coating solution. Many static mixers are able to mix a viscous, with viscosities greater than 100 mPa.s, laminar, heterogeneous fluid stream in a way that the polymer latex is not disrupted to an extend that the coating solution becomes unusable. Such a mixer is also capable of mixing said solution, without introducing gas bubbles into said solution, said amount of gas bubbles being in general less than 1 % v/v into the solution, preferably less than 0.3% v/v. Therefore in a preferred embodiment the method of the invention utilises a static mixer. Generally the volume of a static mixer is comprised between 50 millilitre and 10 litre, preferably between 1 millilitre and 1 litre.

Non-limiting examples of a static mixer that can be used in the present invention are static mixers capable of laminar mixing. Commercially available examples of such static mixers are e.g. Sulzer SMX, Sulzer SMXL, Koch SMX, Koch SMXL, Chemineer Kenics KM, Statiflo Motionless Mixer Series, Primix Primixer, Primix Primixer Quattro, Ross ISG, any type deviated from the mentioned types, or any other manufacturer. Static mixers are usually build from short elements, which can be combined in a typical manner. These elements cause the fluid stream to be separated and joined together. Through combination of elements this process is repeated, leading to the homogenisation of the cheese coating components. The more elements are combined, the more often the stream is divided and joined and the better is the mixing. The number of elements, and therefore the length of a chosen static mixer, is determined by the required homogeneity of the final cheese coating solution. The diameter of a chosen static mixer is determined by the desired flow rate through the mixer.

A static mixer can operate in a fully continuous mode, but also in an intermittent continuous mode or a fed batch mode. In a fed batch mode, the largest component (in quantity) is added to the mixing device first, subsequently the smaller quantity components are added. The feed to the mixer can be interrupted if required. To maintain the quality, i.e. composition of the cheese coating solution, all component feeds should preferably be stopped at the same time. This is particularly assisted by a suitable computer and/or automated controller.

The production of the coating solution in a continuous mode allows, as mentioned before, the implementation of the production of coating solutions in a method for the coating of cheeses and it is therefore preferred. As a result the method for the coating of cheeses is made more controllable and flexible by allowing the amount and type of component added to the coating solution to be regulated by an operator. Preferably the operator is able to regulate the contents of the coating solution by means of a computer and/or automated controller. Therefore in a preferred embodiment of the invention said process is controlled by a computer and/or automated controller, able to regulate the kind and/or the amount of components joined together. Preferably the contents of the coating solution to be regulated via a computer and/or an automated controller are determined by a computer program applied to said computer and/or automated controller. Therefore in another embodiment of the invention, said process is controlled by a computer program applied to a computer and/or automated controller, said program determining the kind and/or amount of components joined together. The present invention also provides with a computer program which in combination with a computer and/or automated controller regulates the in-line production of coating on a cheese in a method of the invention.

In another aspect the invention provides the use of a computer program applied to a computer and/or automated controller able to regulate the kind and/or the amount of components joined together in a method of the invention.

In a preferred embodiment, the coating solution comprises a polyene fungicide, preferably in suspended form. Preferably, said polyene fungicide comprises natamycin or a functional equivalent thereof. Functional equivalents of natamycin are members of a group of compounds comprising the same fungicide activity in kind, not necessarily in amount. The members of this group comprise at least a macrocyclic lactone-ring with a number of conjugated carbon-carbon double bonds. Besides natamycin also its calcium, barium and magnesium salts can be used. Non-limiting examples of a functional equivalent of natamycin are derivatives like natamycin methanol solvate, stabilised by storing under nitrogen gas and/or -30°C. Besides α-natamycin, also the δ-natamycin and the γ-natamycin can be used. Methods for the preparation of some functional equivalents of natamycin are described in US 5,821,233. Some equivalent salts of natamycin or functional equivalents thereof are described in Brik, H, "Natamycin" Analytical profiles of Drug Substances 10, 513-561 (1980).

In one aspect the invention provides a cheese coating device comprising an in-line mixing device for producing a cheese coating solution, which further comprises at least a polymer latex and one or more other components, wherein said mixing device is capable of generating a continuous homogeneous fluid stream of cheese coating solution from a heterogeneous fluid. In a preferred embodiment the invention provides with a cheese coating device where said heterogeneous fluid stream is repeatedly mixed by separation and joining of the fluid stream until an essentially homogeneous fluid stream is produced, part of which is then applied to said cheese. With the term "in-line mixing device" is meant a dynamic in-line mixer and a static mixer or functional equivalent thereof. The invention also provides with a cheese coating device further comprising a cheese coating solution and/or components thereof.

In another aspect the invention provides a cheese coating device capable of performing a method of the invention. In another embodiment the invention also provides a cheese coating device comprising means for the transportation of a cheese and means for applying a coating solution on at least part of a cheese further comprising an in-line mixing device for the mixing of cheese coating components. Preferably, at least one of said components comprises a viscosity of at least 4000 mPa.s, therefore the mixing device operates in the laminar flow regime. Laminar mixing devices can be either a dynamic in-line mixer or preferably a motionless static (in-line) mixer. Said mixing of cheese coating components results in a homogeneous fluid which does not comprise gas bubbles, the amount of gas bubbles in the fluid being in general less than 1 % v/v and preferably less than 0.3% v/v, part of which fluid is then applied to said cheese. A motionless mixer is, among others, preferred since this mixer does not comprise any moving parts and is therefore easy to clean, cost effective and does not require a lot of maintenance. Therefore in a preferred embodiment of the invention the cheese coating device comprises a static mixer or a functional equivalent thereof. A minimal configuration of a cheese coating device of the invention comprises means for the transportation of a cheese, means for mixing cheese coating components and means for applying a cheese coating solution onto said cheese. The minimal configuration may be extended to include means e.g. for distributing applied cheese coating solution evenly on the cheese. In one embodiment of a cheese coating device of the invention, a cheese coating device in the art is adapted to include means for the mixing of cheese coating components. Preferably this is done by placing the mixing device operational in front of means for applying coating solution onto the cheese. In a further embodiment a cheese coating device of the invention also comprises a computer program which, in combination with a computer and/or automated controller, regulates the in-line production of coating on the cheese.

A mixing device of the invention needs means for the influx of components of the cheese coating solution. Preferably such means include storage devices from which in a continuous manner components can be extracted. Preferably, the device comprises means for the transportation of components and cheese coating solution, such means may include pipes, valves, pumps etc.

With a means and/or method of the invention, the cheese manufacturer is capable of directly adjusting the type of coating solution to be applied to the cheese. This capability can be used to formulate coating solutions that exactly meet the demands at the time of use. For example, a cheese coating device of the invention allows the optimisation of the amount of polyene fungicide that is incorporated into the cheese coating, thereby decreasing the costs of the cheese. One can of course use suboptimal amounts of polyene fungicide. However, in such case the storage time of the cheese must be reduced due to undesired mould growth. Storage times can of course be reduced in the ripening phase of the cheese. The effect being however, the necessity for an earlier than usual application of another coating on the cheese. The cheese manufacturer can also choose to adjust the coating solution on the basis of the dry matter content. The currently available polymer latex compositions that are suitable for the generation of a cheese coating vary in dry matter content between 30 and 58 % (w/w). Coatings with a higher dry matter content result in a thicker layer of coating upon drying of the coating solution. Such thicker coatings are typically preferred for young and/or semi soft cheeses which tend to loose their intended shape more easily than the hard or semi-hard cheeses. However, also for the latter, a high dry matter content coating is sometimes preferred. The cheese coating is often, per weight, cheaper than the cheese. Therefore a thicker coating results in a better price per weight of cheese.

In another aspect the invention provides the use of an in-line mixing device of the invention in a method of the invention or a cheese coating device of the invention. In a preferred embodiment of the invention the in-line mixing device is a static mixer. In another preferred embodiment the in-line mixing device is a dynamic in-line mixer.

Further advantageous embodiments of the invention are described in the claims.

### Examples

### Materials

Basepolymer SDM 4210 KL approx. 45% purchased from Clariant GmbH, Division Cellulose Ethers & Polymerisates, D-65926 Frankfurt am Main.
Basepolymer VDM 4220 KL approx. 58% purchased from Clariant GmbH, Division Cellulose Ethers & Polymerisates, D-65926 Frankfurt am Main.
Delvocid sol powder purchased from DSM Food Specialities, Delft.
Colouring agent, Annatto 10% solution purchased from DSM Food Specialities, Delft.
Tap water.
Other colours.
pH regulating agents.
Viscosity regulating agents.

### Methods

This method of producing cheese coatings is based on a mixing system in which the basepolymers are mixed and/or diluted with tap water, colorants and anti-mycotic ingredients to obtain a tailor made reproducible cheese coating which, eventually in-line, is distributed on cheeses by an automated brushing machine.

The standard treatment is done by mixing Basepolymer SDM 4210 KL approx. 45% (purchased from Clariant GmbH, Division Cellulose Ethers & Polymerisates, D-65926 Frankfurt am Main) with tap water to get the right viscosity to apply on cheeses without striping or spattering.

Normally the 45% (w/w) dispersion is diluted to a dry matter range of ± 35 - 41 % dry weight in order to get the right viscosity.

The colour of a coating solution can be adjusted from transparent to any desired colour. Colour can be added by mixing in a colouring agent.

In general the colour is adjusted to yellow by adding a 10 % (w/w) solution of annatto (E160b) to the mass to a final concentration of 0 - 1 % (w/w).

Other colours can be brown, white, red and black in different intensities.

The anti-mycotic activity is introduced by adding natamycin as a stable suspension of Delvocid sol as described in patent EP-A-0678241 titled " Stable Natamycin Suspensions" and the US-A-5,552,151 with the same title.

The amount of natamycin added is preferably in a range from 0 - 750 ppm of active natamycin.

### Mixing devices

The actual mixers used for an appropriate mixing of cheese coatings are mixers designed to mix high viscous shear-thinning products.

Static mixers of the above mentioned types are suitable for laminar mixing. The number of elements is between 1 and 100, preferably between 2 and 20. The diameter is chosen according to the flow rate.

Dynamic in-line mixers are also suitable for laminar mixing. They comprise a mixing chamber and an agitator The diameter of the mixing chamber is of the same order of magnitude as that of the feed- and/or outlet pipe.

### Example 1

To obtain a homogeneously prepared mixture, basepolymer SDM 4210 KL approx. 45% (purchased from Clariant GmbH, Division Cellulose Ethers & Polymerisates, D-65926 Frankfurt am Main) is pumped through a static mixer type Sulzer SMX of 10 mm diameter and 15 elements length with a flow rate of 25 kg per hour.

While passing through the static mixer the basepolymer is mixed with local tap water in a ratio of 9 : 1.

The obtained product is produced without essentially introducing air and without eventual degradation of the active components like natamycin.

The product can be obtained in a very reproducible way without deviations in viscosity.

This continuous way of producing offers several advantages in comparison with a batch or semibatch system. In the latter drawbacks related to the cleaning, stability of the components, reproducibility and a possible influence on the reological specifications are present.

### Example 2

To obtain a homogeneously prepared mixture, basepolymer SDM 4210 KL approx. 45% (purchased from Clariant GmbH, Division Cellulose Ethers & Polymerisates, D-65926 Frankfurt am Main) is pumped through a static mixer type Sulzer SMX of 10 mm diameter and 15 elements length with a flow rate of 25 kg per hour.

While passing through the static mixer the basepolymer is mixed with local tap water and with the colorant annatto in a ratio of 9:0.9:0.1.

The obtained deep yellow product is produced without undesirable introduction of air and without eventual degradation of the active components like natamycin.

Subsequently the ratio is changed by mixing the basepolymer with only local tap water to 9:1.

The obtained white product can be produced within 15 seconds.

### Example 3

To obtain a homogeneously prepared mixture directly suitable to apply on cheese by means of a standard brushing machine, basepolymer SDM 4210 KL approx. 45% (purchased from Clariant GmbH, Division Cellulose Ethers & Polymerisates, D-65926 Frankfurt am Main) is pumped through a static mixer as described in example 1 with a flow rate of 25 kg per hour.

While passing through the static mixer the basepolymer is mixed with local tap water, annatto and Delvocid sol in a ratio of 88:10:0.5:0.5.

The obtained homogeneous cheese coating has a viscosity of 6 - 7 Pa.s (measured by a Brookfield machine RVT at 23°C and 20 rpm, according to ISO 2555 standard) and a active natamycin content of 500 and a medium intensity of yellow.

### Example 4

To obtain a homogeneously prepared mixture directly suitable to apply on cheese by means of a standard brushing machine with an adjustable dry matter, basepolymer SDM 4210 KL approx. 45% and the VDM 4220 KL approx. 58% (purchased from Clariant GmbH, Division Cellulose Ethers & Polymerisates, D-65926 Frankfurt am Main) is pumped through a static mixer as described in example 1 with a flow rate of 25 kg per hour.

While passing through the static mixer the two basepolymers are mixed with local tap water, annatto and Delvocid sol in a ratio of 88 (polymer):10:0.5:0.5.

The obtained mixture can be adjusted in dry matter in a ratio of 39 - 51 % dry matter as a homogeneous cheese coating with a viscosity of 6 - 7 Pa.s (measured by a Brookfield machine at 23°C and 20 rpm), an active natamycin content of 500 and a medium intensity of yellow.

### Example 5

In this example the mixing device is a dynamic in-line mixer, comprising a marine propeller type impeller and wherein the mixing chamber is marginally larger than the impeller.

To obtain a homogeneously prepared mixture, basepolymer SDM 4210 KL approx. 45% (purchased from Clariant GmbH, Division Cellulose Ethers & Polymerisates, D-65926 Frankfurt am Main) is pumped through a dynamic in-line mixer fitted with a propeller with a flow rate of 25 kg per hour.

Before entering the mixing chamber of the dynamic in-line mixer the basepolymer is combined with local tap water and with the colorant annatto in a ratio of 9:0.9:0.1.

The obtained deep yellow product is produced without undesirable introduction of air and without eventual degradation of the active components like natamycin.

The product can be obtained in a very reproducible way without deviations in viscosity.

## Claims

1. A method for the preparation of a cheese, wherein the cheese is provided with a cheese coating by providing said cheese with an homogeneous coating solution, which is produced continuously with the application of the cheese coating solution onto the cheese, wherein the coating solution is generated by mixing a number of components to form a homogeneous coating solution, whereby the introduction of gas bubbles is avoided and wherein at least part of the coating solution is subsequently applied in whole or in part to said cheese.

2. A method according to claim 1, wherein at least one of said components comprises a polymer latex, whereby during mixing damage to at least said polymer latex is avoided.

3. A method according to claim 1 or claim 2, wherein at least one of said components comprises a polyene fungicide.

4. A method according to any one of claims 1 to 3, wherein said process comprises mixing without agitation.

5. A method according to any one of claims 1 to 4, wherein said mixing comprises the joining of coating solution components into a single as yet heterogeneous fluid stream, which fluid stream is subsequently repeatedly mixed by separation and joining of the fluid stream until an essentially homogeneous coating solution is produced.

6. A method according to any one of claims 1 to 5, wherein said mixing utilises a static mixer or a functional equivalent thereof.

7. A method according to any one of claims 1 to 3, wherein said mixing utilises a dynamic in-line mixer.

8. A method according to any one of claims 1 to 7, wherein said method is controlled by a computer and/or automated controller able to regulate the kind and/or the amount of component joined into the fluid stream.

9. A method according to any one of claims 3 to 8, wherein said component comprising a polyene fungicide comprises a polyene fungicide in suspended form.

10. A method according to any one of claims 3 to 9, wherein said polyene fungicide comprises natamycin or a functional equivalent thereof.

11. A computer program which in combination with a computer and/or automated controller regulates the continuous production of coating on a cheese in a method according to any one of claims 1 to 10.

12. A cheese coating device comprising a means for mixing cheese coating components, means for the transportation of a cheese to be coated and means for applying a coating solution on at least part of a cheese to be coated, capable of performing a method according to any one of claims 1 to 10.

13. A cheese coating device according to claim 12 comprising an in-line mixing device for producing a cheese coating solution, said cheese coating solution comprising at least a polymer latex and one or more other components, wherein said mixing device is capable of generating a continuous homogeneous fluid stream of cheese coating solution from a heterogeneous fluid, and which cheese coating device further comprises means for the transportation of a cheese to be coated and means for applying a coating solution on at least part of a cheese to be coated.

14. A cheese coating device according to claim 13, wherein said heterogeneous fluid stream is repeatedly mixed by separation and joining of the fluid stream until a homogeneous fluid stream is produced.

15. A cheese coating device according to claim 13 or 14, further comprising a cheese coating solution and/or components thereof.

16. A cheese coating device according to any one of claims 13 to 15, wherein said in-line mixing device comprises a static mixer or a functional equivalent thereof.

17. A cheese coating device according to any one of claims 13 to 15, wherein said in-line mixing device comprises a dynamic in-line mixer.

18. A cheese coating device according to any one of claims 12 to 17, further comprising a computer program which in combination with a computer and/or automated controller regulates the continuous production of coating on the cheese.

19. Use of an in-line mixing device in a method according to any one of claims 1 to11, or in a cheese coating device according to any one of claims 12 to 18.

20. Use of an in-line mixing device according to claim 19 wherein the in-line mixing device is a static mixer.

21. Use of an in-line mixing device according to claim 19 wherein the in-line mixing device is a dynamic in-line mixer.

22. Use of a computer program applied to a computer and/or automated controller able to regulate the kind and/or the amount of components mixed to form a homogeneous coating solution in a method according to any one of claims 1 to 11.

## Patentansprüche

1. Verfahren zur Herstellung eines Käses, wobei der Käse mit einem Käseüberzug versehen wird, indem der Käse mit einer homogenen Überzugslösung versehen wird, die kontinuierlich mit dem Aufbringen der Käseüberzugslösung auf den Käse hergestellt wird, wobei die Überzugslösung durch Mischen einer Reihe von Komponenten, um eine homogene Überzugslösung herzustellen, hergestellt wird, wodurch das Einbringen von Gasblasen vermieden wird und wobei mindestens ein Teil der Überzugslösung anschließend im Ganzen oder teilweise auf den Käse aufgebracht wird.

2. Verfahren nach Anspruch 1, wobei mindestens eine der Komponenten einen Polymerlatex umfasst, wodurch während des Mischens Beschädigung zumindest des Polymerlatex vermieden wird.

3. Verfahren nach Anspruch 1 oder Anspruch 2, wobei mindestens eine der Komponenten ein Polyenfungizid umfasst.

4. Verfahren nach einem der Ansprüche 1 bis 3, wobei das Verfahren Mischen ohne Rühren umfasst.

5. Verfahren nach einem der Ansprüche 1 bis 4, wobei das Mischen das Beigeben von Überzugslösungskomponenten in einen einzigen, bis dahin heterogenen Flüssigkeitsstrom umfasst, wobei der Flüssigkeitsstrom anschließend wiederholt durch Abtrennen und Zusammenfügen des Flüssigkeitsstroms gemischt wird, bis eine im Wesentlichen homogene Überzugslösung hergestellt worden ist.

6. Verfahren nach einem der Ansprüche 1 bis 5, wobei das Mischen einen statischen Mischer oder ein funktionelles Äquivalent dazu verwendet.

7. Verfahren nach einem der Ansprüche 1 bis 3, wobei das Mischen einen dynamischen In-line-Mischer verwendet.

8. Verfahren nach einem der Ansprüche 1 bis 7, wobei das Verfahren durch einen Computer und/oder eine automatische Steuerung gesteuert wird, die die Art und/oder die Menge der zum Flüssigkeitsstrom beigegebenen Komponenten steuern kann.

9. Verfahren nach einem der Ansprüche 3 bis 8, wobei die ein Polyenfungizid umfassende Komponente ein Polyenfungizid in suspendierter Form umfasst.

10. Verfahren nach einem der Ansprüche 3 bis 9, wobei das Polyenfungizid Natamycin oder ein funktionelles Äquivalent davon umfasst.

11. Computerprogramm, das in Kombination mit einem Computer und/oder einer automatischen Steuerung die kontinuierliche Produktion eines Überzugs auf einem Käse bei einem Verfahren nach einem der Ansprüche 1 bis 10 steuert.

12. Käseüberzugsvorrichtung, umfassend Einrichtungen zum Mischen von Käseüberzugskomponenten, Einrichtungen zum Transport eines Käses, der überzogen werden soll, und Einrichtungen zum Aufbringen einer Überzugslösung auf mindestens einen Teil eines Käses, der überzogen werden soll, die in der Lage sind, ein Verfahren nach einem der Ansprüche 1 bis 10 durchzuführen.

13. Käseüberzugsvorrichtung nach Anspruch 12, umfassend eine In-line-Mischvorrichtung zum Herstellen einer Käseüberzugslösung, wobei die Käseüberzugslösung mindestens einen Polymerlatex und eine oder mehrere weitere Komponenten umfasst, wobei die Mischvorrichtung in der Lage ist, einen kontinuierlichen homogenen Flüssigkeitsstrom von Käseüberzugslösung aus einer heterogenen Flüssigkeit herzustellen und wobei die Käseüberzugsvorrichtung ferner Einrichtungen zum Transport eines Käses, der überzogen werden soll, sowie Einrichtungen zum Aufbringen einer Überzugslösung auf mindestens einen Teil eines Käses, der überzogen werden soll, umfasst.

14. Käseüberzugsvorrichtung nach Anspruch 13, wobei der heterogene Flüssigkeitsstrom wiederholt durch Abtrennung und Zusammenfügen des Flüssigkeitsstroms gemischt wird, bis ein homogener Flüssigkeitsstrom hergestellt worden ist.

15. Käseüberzugsvorrichtung nach Anspruch 13 oder 14, die ferner eine Käseüberzugslösung und/oder Komponenten von dieser umfasst.

16. Käseüberzugsvorrichtung nach einem der Ansprüche 13 bis 15, wobei die In-line-Mischvorrichtung einen statischen Mischer oder ein funktionelles Äquivalent dazu umfasst.

17. Käseüberzugsvorrichtung nach einem der Ansprüche 13 bis 15, wobei die In-line-Mischvorrichtung einen dynamischen In-line-Mischer umfasst.

18. Käseüberzugsvorrichtung nach einem der Ansprüche 12 bis 17, die ferner ein Computerprogramm umfasst, das in Kombination mit einem Computer und/oder einer automatischen Steuerung die kontinuierliche Produktion eines Überzugs auf dem Käse steuert.

19. Verwendung einer In-line-Mischvorrichtung bei einem Verfahren nach einem der Ansprüche 1 bis 11 oder in einer Käseüberzugsvorrichtung nach einem der Ansprüche 12 bis 18.

20. Verwendung einer In-line-Mischvorrichtung nach Anspruch 19, wobei die In-line-Mischvorrichtung ein statischer Mischer ist.

21. Verwendung einer In-line-Mischvorrichtung nach Anspruch 19, wobei die In-line-Mischvorrichtung ein dynamischer In-line-Mischer ist.

22. Verwendung eines Computerprogramms, das auf einen Computer und/oder eine automatische Steuerung angewendet wird, um die Art und/oder die Menge der Komponenten, die zur Bildung einer homogenen Überzugslösung bei einem Verfahren nach einem der Ansprüche 1 bis 11 gemischt werden, zu steuern.

## Revendications

1. Procédé de préparation d'un fromage, dans lequel le fromage est fourni avec un enrobage pour fromage en dotant ledit fromage d'une solution d'enrobage homogène, lequel est produit en continu avec l'application de la solution d'enrobage pour fromage sur le fromage, dans lequel la solution d'enrobage est produite en mélangeant un certain nombre de composants pour former une solution d'enrobage homogène dans laquelle on évite l'introduction de bulles de gaz, et dans lequel au moins une partie de la solution d'enrobage est par la suite appliquée sur la totalité ou une partie dudit fromage.

2. Procédé selon la revendication 1, dans lequel au moins un desdits composants comprend un latex polymère, dans lequel on évite des dommages à au moins ledit latex polymère pendant l'agitation.

3. Procédé selon la revendication 1 ou la revendication 2, dans lequel au moins un desdits composants comprend un fongicide à base de polyène.

4. Procédé selon l'une quelconque des revendications 1 à 3, dans lequel ledit procédé comprend un mélange sans agitation.

5. Procédé selon l'une quelconque des revendications 1 à 4, dans lequel ledit mélange comprend la combinaison des composants de la solution d'enrobage dans un écoulement de fluide unique, mais encore hétérogène, lequel écoulement de fluide est par la suite mélangé à maintes reprises par la séparation et la combinaison de l'écoulement de fluide jusqu'à l'obtention d'une solution d'enrobage essentiellement homogène.

6. Procédé selon l'une quelconque des revendications 1 à 5, dans lequel ledit mélange fait appel à un mélangeur statique ou un équivalent fonctionnel de celui-ci.

7. Procédé selon l'une quelconque des revendications 1 à 3, dans lequel ledit mélange fait appel à un mélangeur dynamique en ligne.

8. Procédé selon l'une quelconque des revendications 1 à 7, dans lequel ledit procédé est régulé par un ordinateur et/ou un régulateur automatisé capable de réguler le type et/ou la quantité de composant combiné dans l'écoulement de fluide.

9. Procédé selon l'une quelconque des revendications 3 à 8, dans lequel ledit composant comprenant un fongicide à base de polyène comprend un fongicide à base de polyène sous une forme en suspension.

10. Procédé selon l'une quelconque des revendications 3 à 9, dans lequel ledit fongicide à base de polyène comprend de la natamycine ou un équivalent fonctionnel de celle-ci.

11. Programme informatique qui, en association avec un ordinateur et/ou un régulateur automatisé, régule la fabrication en continu d'un enrobage sur un fromage dans un procédé selon l'une quelconque des revendications 1 à 10.

12. Dispositif d'enrobage pour fromage comprenant un moyen pour mélanger des composants d'un enrobage pour fromage, un moyen de transport d'un fromage à enrober et un moyen pour l'application d'une solution d'enrobage sur au moins une partie d'un fromage à enrober, capable de mettre en oeuvre un procédé selon l'une quelconque des revendications 1 à 10.

13. Dispositif d'enrobage pour fromage selon la revendication 12, qui comprend un dispositif de mélange en ligne pour la fabrication d'une solution d'enrobage pour fromage, ladite solution d'enrobage pour fromage comprenant au moins un latex polymère et un ou plusieurs autres composants, dans lequel ledit dispositif de mélange peut générer un écoulement de fluide homogène continu d'une solution d'enrobage pour fromage à partir d'un fluide hétérogène, et lequel dispositif d'enrobage pour fromage comprend en outre un moyen pour le transport d'un fromage à enrober et un moyen pour l'application d'une solution d'enrobage sur au moins une partie d'un fromage à enrober.

14. Dispositif d'enrobage pour fromage selon la revendication 13, dans lequel ledit écoulement de fluide hétérogène est mélangé à maintes reprises par la séparation et la combinaison de l'écoulement de fluide jusqu'à l'obtention d'un écoulement de fluide homogène.

15. Dispositif d'enrobage pour fromage selon l'une des revendications 13 ou 14, qui comprend en outre une solution d'enrobage pour fromage et/ou des composants de celle-ci.

16. Dispositif d'enrobage pour fromage selon l'une quelconque des revendications 13 à 15, dans lequel ledit dispositif de mélange en ligne comprend un mélangeur statique ou un équivalent fonctionnel de celui-ci.

17. Dispositif d'enrobage pour fromage selon l'une quelconque des revendications 13 à 15, dans lequel ledit dispositif de mélange en ligne comprend un mélangeur dynamique en ligne.

18. Dispositif d'enrobage pour fromage selon l'une quelconque des revendications 12 à 17, qui comprend en outre un programme informatique qui, en association avec un ordinateur et/ou un régulateur automatisé, régule la fabrication en continu d'un enrobage sur un fromage.

19. Utilisation d'un dispositif de mélange en ligne dans un procédé selon l'une quelconque des revendications 1 à 11, ou dans un dispositif d'enrobage pour fromage selon l'une quelconque des revendications 12 à 18.

20. Utilisation d'un dispositif de mélange en ligne selon la revendication 19, dans laquelle le dispositif de mélange en ligne est un mélangeur statique.

21. Utilisation d'un dispositif de mélange en ligne selon la revendication 19, dans laquelle le dispositif de mélange en ligne est un mélangeur dynamique en ligne.

22. Utilisation d'un programme informatique appliqué à un ordinateur et/ou à un régulateur automatisé, capable de réguler le type et/ou la quantité des composants mélangés pour former une solution d'enrobage homogène dans un procédé selon l'une quelconque des revendications 1 à 11.
